(19) Europäisches Patentamt
European Patent Office
Office européen des brevets

(11) **EP 1 783 348 A1**

(12) **EUROPEAN PATENT APPLICATION**
published in accordance with Art. 158(3) EPC

(43) Date of publication:
**09.05.2007 Bulletin 2007/19**

(21) Application number: **05750914.3**

(22) Date of filing: **20.06.2005**

(51) Int Cl.:
*F02D 45/00* (2006.01)    *F02D 13/02* (2006.01)

(86) International application number:
**PCT/JP2005/011289**

(87) International publication number:
**WO 2006/006348 (19.01.2006 Gazette 2006/03)**

(84) Designated Contracting States:
**DE GB**

(30) Priority: **07.07.2004 JP 2004201023**

(71) Applicant: **HONDA MOTOR CO., Ltd.**
**Tokyo 107-8556 (JP)**

(72) Inventors:
- **TAGAMI, Hiroshi**
  **c/o K.K. Honda Gijutsu Kenkyusho**
  **Wako-shi, Saitama 3510193 (JP)**
- **YASUI, Yuji**
  **c/o K.K. Honda Gijutsu Kenkyusho**
  **Wako-shi, Saitama 3510193 (JP)**

- **SAITO, Mitsunobu**
  **c/o K.K. Honda Gijutsu Kenkyusho**
  **Wako-shi, Saitama 3510193 (JP)**
- **HIGASHITANI, Kosuke**
  **K.K. Honda Gijutsu Kenkyusho**
  **Wako-shi, Saitama 3510193 (JP)**

(74) Representative: **Prechtel, Jörg et al**
**Weickmann & Weickmann**
**Patentanwälte**
**Postfach 86 08 20**
**81635 München (DE)**

(54) **DEVICE, METHOD, AND PROGRAM FOR ESTIMATING INTAKE AIR AMOUNT**

(57) A device, a method, and a program for estimating an intake air amount. The device for estimating the intake air amount used for providing the intake air amount of an internal combustion engine having a variable valve mechanism comprises a reference value acquisition means for providing an intake air amount reference value from a specified map based on the rotational speed, valve lift, and valve phase angle of the internal combustion engine, a measurement value acquisition means for providing a measurement value according to the output of an air flow meter installed in the intake pipe of the internal combustion engine, a calculation means for providing a correction factor to minimize a deviation between a value obtained by multiplying the intake air amount reference value by the correction factor and the measurement value, and an estimated value calculating means for calculating an estimated intake air amount value by multiplying the provided correction factor by the intake air amount reference value.

FIG. 2

EP 1 783 348 A1

**Description**

Technical Field

The present invention relates to an apparatus for filtering an output of an airflow meter, and particularly, to an apparatus for removing pulsing content included in an output value of the airflow meter.

Background art

A throttle valve is provided in an intake passage of the engine. An opening of the throttle valve is adjusted, thereby controlling an intake air volume. Since the throttle valve has a resistance in ventilation, a pressure in the intake passage becomes negative and air induction efficiency is deteriorated when the opening is small. Thus, in recent years, a non-throttle type reciprocal engine without a throttle valve has been developed.

The non-throttle type engine adjusts a valve lift amount and a valve opening/closing timing using a variable valve lift mechanism and a variable valve phase mechanism, thereby controlling an intake air volume. The variable valve lift mechanism changes a valve lift amount by hydraulically switching to a cam which has a predetermined height as disclosed in Japanese Patent Application Laid-Open (JP-A) No.7-54625. In the variable valve phase mechanism, as disclosed in JP-A. No.11-223113, an end of a cam shaft is provided with a vane for hydraulically delay or advance a phase angle, thereby making a valve phase angle variable.

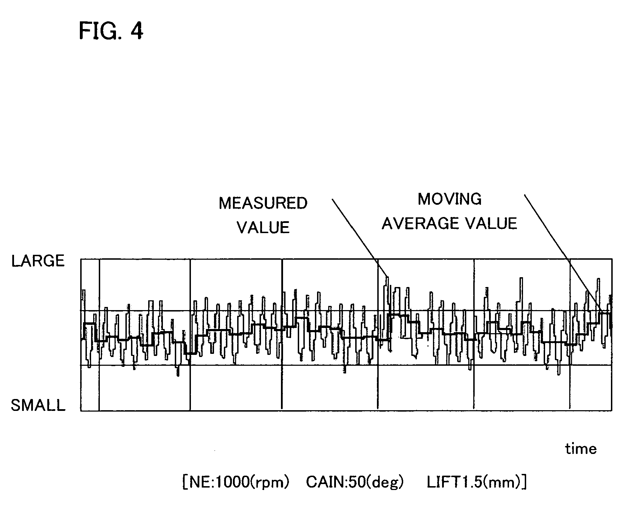

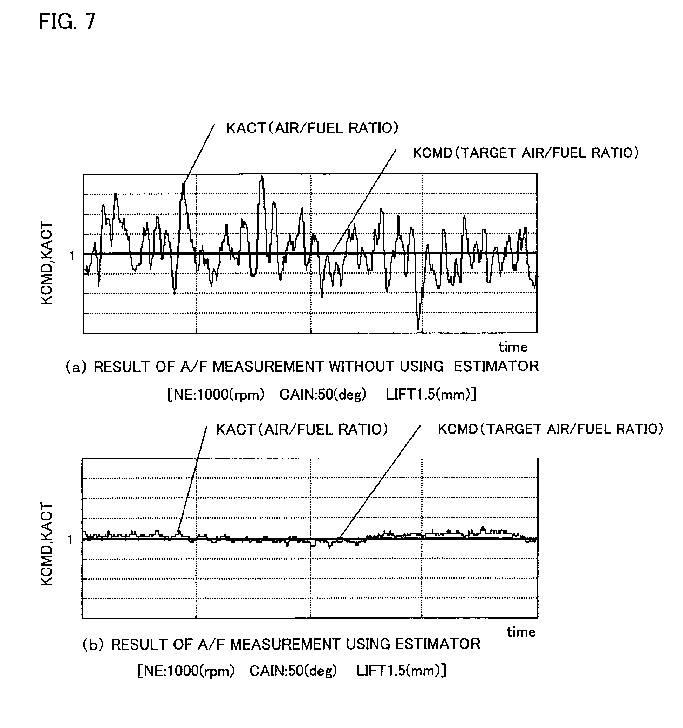

In the non-throttle type engine, an air/fuel ratio (A/F value) fluctuates as shown in Fig. 7(a) and the air/fuel ratio does not converge at a target one. When an output of the airflow meter of the non-throttle type engine is measured, the measured value largely fluctuates as shown in Fig. 4. This is because that a reciprocal engine intermittently sucks air by opening and closing operations of the intake valve during an intake stroke, and thus pulses are generated in air flow in the intake passage.

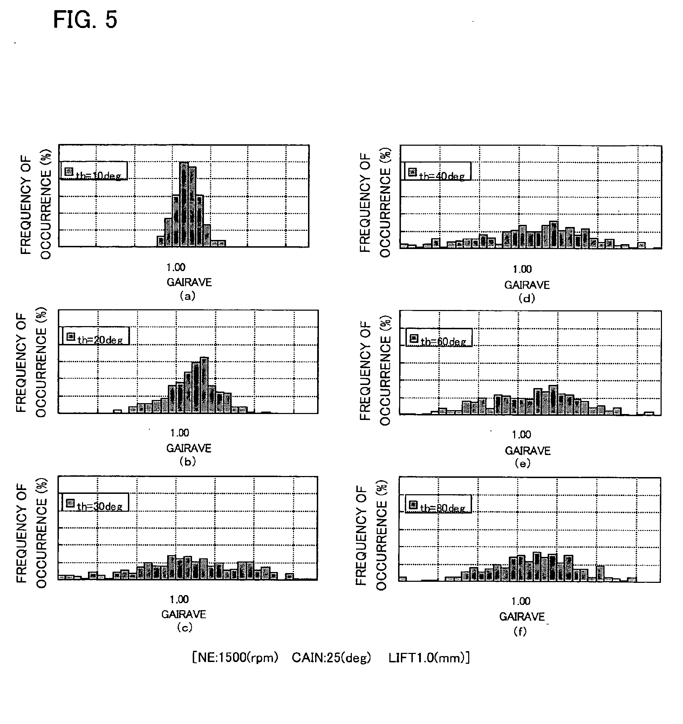

Figs. 5(a) to 5(f) show changes in fluctuations of an intake air volume with respect to average values when a throttle valve opening th of a throttle type engine is increased. Fig. 5(a) shows fluctuation of an intake air volume when the throttle valve opening is set to 10°, and Figs. 5(b) to 5(f) show fluctuations of an intake air volume when the throttle valve opening is increased by 10°, respectively. If fluctuations of an intake air volume shown in Figs. 5(a) to 5(f) are compared with one another, it can be found that the larger the throttle valve opening is, the more fluctuation of an intake air volume is. If an influence of the throttle valve which functions as a resistance in ventilation is reduced, an influence of the pulses on an intake air volume is increased. Since a throttle valve which functions as a resistance in ventilation is not used in the non-throttle type engine, an influence of pulses is increased, and a measured value from the airflow meter disposed in the intake passage largely fluctuates. A fuel injection apparatus brings an air/fuel ratio closer to a target air/fuel ratio based on an intake air volume. So, if an injection quantity is obtained based on measured values largely fluctuating, the air/fuel ratio will also largely fluctuate, and therefore an air/fuel ratio will not converge at the target one.

In the conventional techniques, various proposals have been made to smoothen a pulsing content when a throttle valve of a throttle valve type engine is fully opened, and to enhance a response in a transient state. For example, to smoothen the pulsing content, there is a technique in which a moving average value of a measured value of an airflow meter is obtained, and the moving average value is used as the measured value. JP-A. No.5-306643 discloses a control method in which an order of a filter is switched in accordance with a state of the engine. JP-A. No.2004-156456 discloses a technique in which the intake air volume is calculated by a sequential-type least squares method using an engine revolution number, an estimated value of intake air volume calculated using a pressure in an intake passage, and a measured value of an airflow meter disposed in the intake passage of the engine.

Disclosure of Invention

Problem to be Solved by the Invention

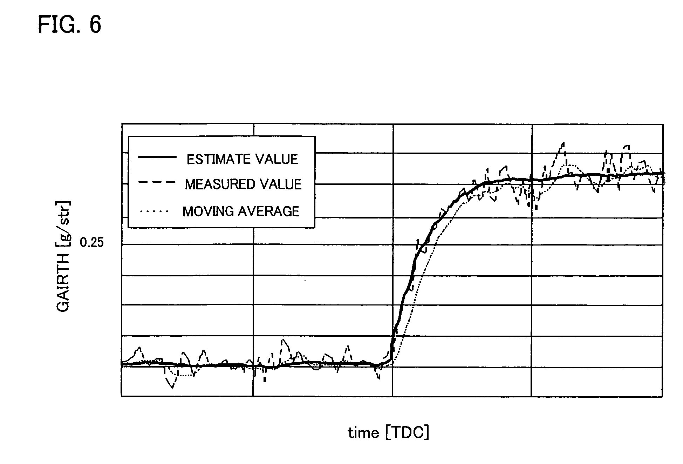

According to a method in which a moving average of measured values is obtained to smoothen fluctuation, however, a delay is generated in transient response as shown in Fig. 6. If an injection quantity is obtained based on the delayed value, an air/fuel ratio is leaned or enriched, thereby resulting in higher emissions and less drivability.

According to the method of JP-A. No.5-306643, it is necessary to set an order of a filter in accordance with conditions of an engine, and therefore extremely large number of steps are required for data setting. Further, in a system in which pulsing content is generated over a wide range from low flow rate to high flow rate, it is difficult to determine whether an output value is in a steady state or in a transient state to set the order of the filter.

In the case of a non-throttle type engine without a throttle valve, a pressure in an intake air passage is the same as the atmospheric pressure, and has no correlation with an intake air volume of the engine and thus. Accordingly, the method of JP-A. No.2004-156456 can not be used.

Under the above-mentioned situation, there are needs for providing an estimating apparatus of an intake air volume for estimating an intake air volume in which pulsing content is removed from a value measured by an airflow meter in an intake passage, without deteriorating response.

Means for Solving Problems

An estimating apparatus of an intake air volume according to an embodiment of the present invention, is used for estimating an intake air volume of an engine having a variable valve mechanism. The estimating apparatus of an intake air volume includes reference value obtaining means for obtaining a reference value of an intake air volume from a predetermined map based on the number of revolutions of the engine, a valve lift amount and a valve phase angle, measured value obtaining means for obtaining a measured value from an output of an airflow meter provided in an intake passage of the engine, computation means for obtaining a correction coefficient which minimizes a deviation between the measured value and a value obtained by multiplying the reference value of an intake air volume by the correction coefficient, and estimated value calculating means for calculating a estimated value of an intake air volume by multiplying the obtained correction coefficient by the reference value of an intake air volume.

The estimating apparatus of an intake air volume, obtains the correction coefficient which links a flow rate value having great fluctuation, obtained from the airflow meter with a flow rate reference value having no fluctuation. Then the estimating apparatus multiplies the correction coefficient by a flow rate reference value to obtain an estimated value of air flow rate. Thus, an estimated value of air flow rate from which pulsing content is removed can be obtained without deteriorating a response.

In the estimating apparatus of an intake air volume according to another embodiment of the invention, the computation means obtains the correction coefficient which minimizes the deviation using a method of least squares.

Since the correction coefficient which minimizes the deviation is obtained using a method of least squares, it is possible to obtain a correction coefficient which is more suitable for obtaining an estimated value of air flow rate, based on a measured value of air flow rate.

According to another embodiment of the present invention, there is provided a program for allowing an electronic control unit to realize the following functions to obtain an intake air volume of an engine having a variable valve mechanism. The functions include a function of obtaining a reference value of an intake air volume from a predetermined map based on the number of revolutions of the engine, a valve lift amount and a valve phase angle, a function of obtaining a measured value corresponding to an output of an airflow meter provided in an intake passage of the engine. The functions further include a function of obtaining a correction coefficient which minimizes a deviation between the measured value and a value obtained by multiplying the reference value of an intake air volume by the correction coefficient and a function of calculating an estimated value of an intake air volume by multiplying the obtained correction coefficient by the reference value of an intake air volume.

The correction coefficient which links a flow rate value having great fluctuation, obtained from the airflow meter with a flow rate reference value having no fluctuation, is obtained. Then the correction coefficient is multiplied by a flow rate reference value to obtain an estimated value of air flow rate. Thus, an estimated value of air flow rate from which pulsing content is removed can be obtained without deteriorating a response.

According to another embodiment of the present invention, there is provided a method for obtaining an intake air volume of an engine having a variable valve mechanism. The method comprises the steps of obtaining a reference value of an intake air volume from a predetermined map based on the number of revolutions of the engine, a valve lift amount and a valve phase angle and obtaining a measured value from an output of an airflow meter provided in an intake passage of the engine. The method further comprises the steps of obtaining a correction coefficient which minimizes a deviation between the measured value and a value obtained by multiplying the reference value of an intake air volume by the correction coefficient and calculating an estimated value of an intake air volume by multiplying the obtained correction coefficient by the reference value of an intake air volume.

The correction coefficient which links a flow rate value having great fluctuation, obtained from the airflow meter with a flow rate reference value having no fluctuation, is obtained. Then the correction coefficient is multiplied by a flow rate reference value to obtain an estimated value of air flow rate. Thus, an estimated value of air flow rate from which pulsing content is removed can be obtained without deteriorating a response.

In the method for obtaining an intake air volume of an engine having a variable valve mechanism, according to another embodiment of the invention, the correction coefficient which minimizes the deviation, is obtained using a method of least squares.

Since the correction coefficient which minimizes the deviation is obtained using a method of least squares, it is possible to obtain a correction coefficient which is more suitable for obtaining an estimated value of air flow rate, based on a measured value of air flow rate.

**Brief Description of Drawings**

Fig. 1 is a schematic diagram of an engine and its controller according to an embodiment of the present invention.
Fig. 2 is a block diagram of an estimating apparatus of an intake air volume according to the embodiment of the invention.
Fig. 3 is a flowchart of computation executed by an intake air volume estimating process according to the embodiment of the invention.
Fig. 4 is a diagram showing an output of an airflow meter and moving average value of an output of an airflow meter in a conventional technique.
Figs. 5(a) to 5(f) are diagrams showing fluctuations of an intake air volume around the average value when an estimating apparatus of an intake air volume is not used in a conventional technique.
Fig. 6 is a diagram showing responsivity of output in a transient state according to the embodiment of the invention.
Figs. 7(a) and 7(b) are diagram showing results of A/F measurement when the estimating apparatus of an intake air volume according to the embodiment of the invention is used and not used.
Fig. 8 is a diagram showing the frequency of occurrence of the A/F ratio when the estimating apparatus of an intake air volume according to the embodiment of the invention is used.

Best Mode for Carrying Out the Invention

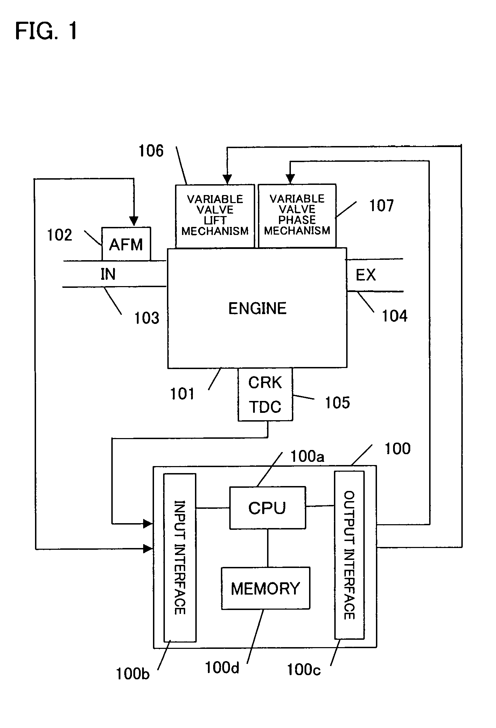

Referring to Fig. 1, one embodiment of an estimating apparatus of an intake air volume which estimates an intake air volume based on a reference value and a measured value of an airflow meter will be explained. Fig. 1 is a block diagram of a gasoline engine having a variable valve mechanism (variable valve lift mechanism, variable valve phase mechanism) and a control apparatus of the gasoline engine according to the embodiment of the present invention. The engine used in the embodiment is a non-throttle valve type engine without a throttle valve in the intake passage. An intake air volume is adjusted by changing a valve lift amount and a valve phase angle by the variable valve mechanism, in place of a throttle valve. Peripheral devices of the engine, not used in the present invention are omitted in Fig. 1.

An electronic control unit ("ECU", hereinafter) 100 includes an input interface 100b for receiving data sent from various portions of the vehicle, a CPU 100a for executing computation to control various portions of the vehicle, a memory 100d having read-only memory (ROM) and random-access memory (RAM), and an output interface 100c for sending control signals to various portions of the vehicle. Various programs and data for controlling the various portions of the vehicle are stored in the ROM of the memory 100d. A program for executing control in accordance with the invention is stored in the ROM. The ROM may be a rewritable ROM such as an EPROM. The RAM is provided with a working area for computation executed by the CPU 100a. Data sent from the various portions of the vehicle and control signals sending to the various portions of the vehicle are temporarily stored in the RAM.

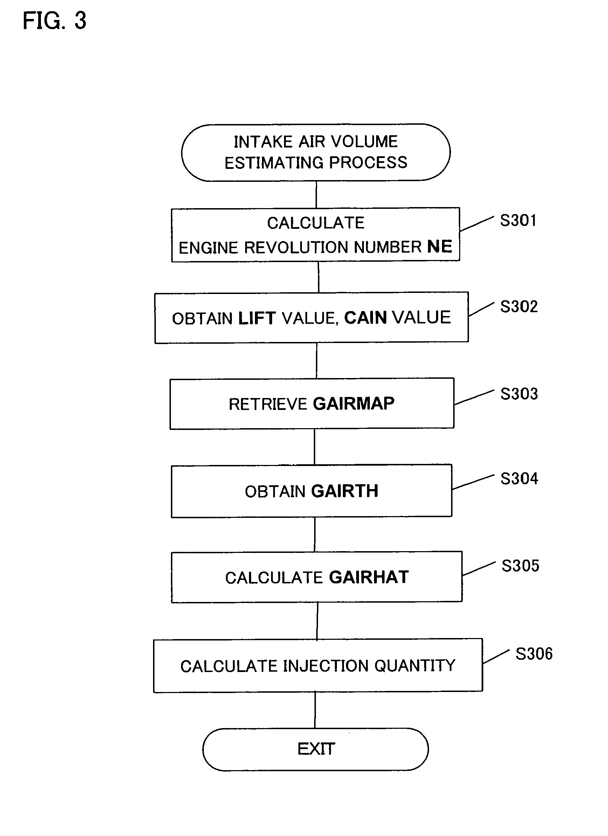

In the embodiment, a program for executing a later-described flowchart shown in Fig. 3, equations for computing an intake air volume estimation, an intake air volume reference map for obtaining a reference value of an intake air volume GAIRMAP under predetermined conditions, and other programs which are necessary for controlling operations of an engine 101, are stored in the ROM.

The intake air volume reference map stored in the ROM includes intake air volume references which are functions of a valve lift amount LIFT, a valve phase angle CAIN and the engine revolution number NE. Reference values GAIRMAP of an intake air volume represent reference values in steady states and transient states obtained from the predetermined parameters mentioned above, and represent changes of an intake air volume caused by changes of the parameters. Reference values GAIRMAP of an intake air volume are used to link measured values from an airflow meter 102 with changes obtained from the map using a method of least squares, and to correct the measured values of an intake air volume, including pulsing content.

Signals sent to the ECU 100 arrive at the input interface 100b, and are converted from analogue to digital. The CPU 100a processes the converted digital signals in accordance with programs stored in the memory 100d, and produces control signals to be sent to the various portions of the vehicle. The output interface 100c sends these control signals to the various portions of the vehicle.

The engine 101 includes a variable valve mechanism. Thus, the ECU 100 also executes programs for controlling a variable valve lift mechanism 106 and a variable valve phase mechanism 107. The ECU 100 sends a valve lift amount LIFT and a valve phase angle CAIN obtained by executing these programs, to the variable valve lift mechanism 106 and the variable valve phase mechanism 107. The obtained valve lift amount LIFT and the valve phase angle CAIN are stored in the RAM, and they are used when a reference value GAIRMAP of an intake air volume is retrieved.

The variable valve lift mechanism 106 is used to change a valve lift amount by switching among cams which push down the valve shaft. That is, the variable valve lift mechanism 106 switches, by hydraulic control, to a cam having a cam height that realizes a predetermined valve lift amount LIFT sent from the ECU 100. Although a valve lift amount is changed by switching among cams in the embodiment, it is possible to employ other variable valve lift mechanisms such as a mechanism in which a fulcrum of a rocker arm can be changed through an actuator, to change a lift amount.

In the variable valve phase mechanism 107, a vane type actuator is incorporated in an end of an intake cam in such a way that a valve phase angle can be changed to generate a phase lead or a phase lag, by hydraulic control. A cam phase angle is changed by hydraulic control in accordance with a valve phase angle CAIN sent from the ECU 100.

According to the non-throttle type engine of the embodiment, as described above, the variable valve lift mechanism 106 and the variable valve phase mechanism 107 are used to control an intake air volume flowing into a cylinder, thus realizing a non-throttle engine.

The engine 101 is provided with a crank angle sensor 105 which detects a rotation angle of a crankshaft. The crank angle sensor 105 contains a TDC sensor which delivers a TDC signal pulse at predetermined crank angle intervals (at intervals of 180° in crank angle, here) and at a top dead center (TDC) where an intake stroke of each cylinder is started, and a CRK sensor which generates one pulse at constant intervals in crank angle, shorter than those of TDC signal pulses (at intervals of 30° in crank angle, for example). TDC signal pulses and the CRK signal pulses are supplied to the ECU 100. These signal pulses are used for controlling various timings for operating the engine, such as fuel injection timing and ignition timing. Especially in this embodiment, these signals are used for calculating the engine revolution number NE by counting the number of TDC signal pulses which are delivered within a predetermined time period. These signals are also used for obtaining timing for sampling measured values from the airflow meter 102.

An intake passage 103 and an exhaust passage 104 are mounted on the engine 101. The airflow meter 102 is mounted on the intake passage 103.

The airflow meter 102 is used for measuring an intake air volume, and a measured flow rate is delivered to the ECU 100. The airflow meter 102 of the embodiment is of a Karman vortex system in which a rod-like resistance is placed in the air flow, and the number of vortexes generated behind the resistance, which are in proportion to a flow rate, is counted by an optical sensor or ultrasonically. Although the Karman vortex system is employed here, a vane type airflow meter or a hot-wire airflow meter can also be employed.

The ECU 100 obtains time of one stroke of the engine by the TDC signal pulse for an air flow rate obtained from the airflow meter 102, and multiplies the time by a predetermined coefficient, thereby obtaining an intake air volume per one stroke (g/str).

Other devices required for operating the engine 101 (e.g., sensors such as a water temperature sensor, a fuel injection apparatus, an ignition plug, three way catalytic converter and the like) are mounted on the engine 101. Some of the devices are not illustrated in the drawing.

In the embodiment, an estimated value of an intake air volume is calculated by the ECU 100 in accordance with the following equations (3) to (5). These equations are used for obtaining an estimated value GAIRHAT of an intake air volume is obtained by sequentially calculating θ(i) which minimizes e(i), using equation (5), based on a reference value GAIRMAP(i) and a measured value GAIRTH(i) of an intake air volume. In order to obtain θ which minimizes deviation e(i), a method of least squares is used in this embodiment. How to derive the above-mentioned equations using t a method of least squares will be described below.

An estimated value of an intake air volume based on a reference value GAIRMAP of an intake air volume is defined as a estimated value GAIRHAT(i) of an intake air volume, and the estimated value is modeled as follows:

[Formula 1]

$$GAIRHAT(i) = \theta(i) \times GAIRMAP(i) \qquad\qquad (1)$$

θ(i): model parameter

A deviation between a measured value (sensor output value) GAIRTH(i) and an estimated value GAIRHAT(i) is defined as e(i), and the deviation is defined as follows:

[Formula 2]

$$e(i) = GAIRTH(i) - \theta(i) \times GAIRMAP(i) \qquad\qquad (2)$$

Then, an air flow rate estimated value GAIRHAT(i) at time i can be calculated using the following equations (3) to (5).

[Formula 3]

$$GAIRHAT(i) = \theta(i) \times GAIRMAP(i) \qquad (3)$$

θ(i): model parameter

[Formula 4]

$$e(i) = GAIRTH(i) - \theta(i-1) \times GAIRMAP(i) \qquad (4)$$

[Formula 5]

$$\theta(i) = \theta(i-1) + \frac{P(i-1) \times GAIRMAP(i)}{1 + GAIRMAP^2(i) \times P(i-1)} \times e(i) \qquad (5)$$

wherein

$$P(i) = P(i-1) - \frac{P(i-1)^2 \times GAIRMAP^2(i)}{1 + GAIRMAP^2(i) \times P(i-1)}$$

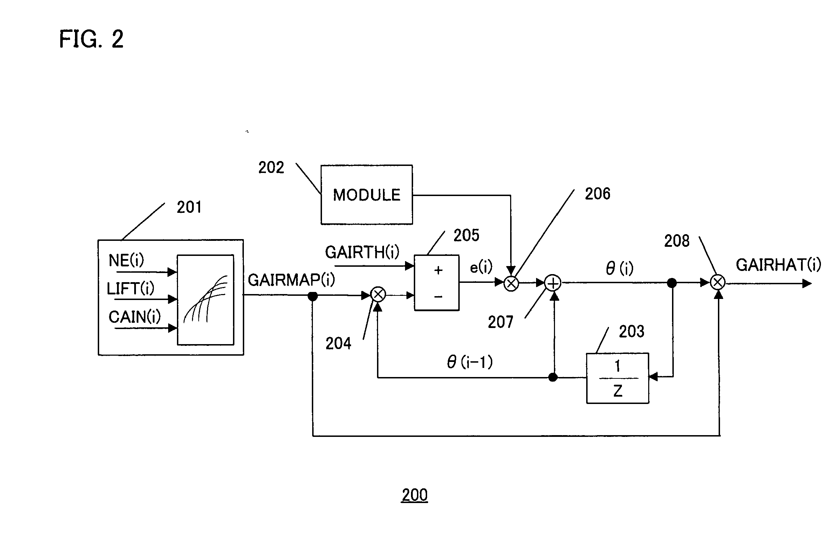

Fig. 2 is a block diagram of an estimating apparatus 200 of an intake air volume. The estimating apparatus 200 of an intake air volume includes a module 201, a module 202 and a module 203. The module 201 stores reference values of an intake air volume as a map, and delivers a corresponding reference value GAIRMAP(i) of an intake air volume, based on the engine revolution number NE(i), a valve lift amount LIFT(i) and a valve phase angle CAIN(i), at time i. A multiplier 204 multiplies the reference value GAIRMAP(i) of an intake air volume output from the module 201 by θ (i-1) delivered from the module 203, and outputs a result thereof to a difference calculator 205. When the output from the multiplier 204 is input, the difference calculator 205 calculates a difference between the input value and a measured value GAIRTH, and delivers a difference value e(i) to a multiplier 206.

The module 202 calculates and delivers a value by which the deviation e(i) is multiplied in equation (5). The multiplier 206 receives the value delivered from the module 202, multiplies this value by the difference value e(i) and delivers a result thereof to an adder 207. The adder 207 adds an output value θ (i-1) from the module 203 to an output value from the multiplier 206, and delivers a result thereof to a multiplier 208 and the module 203.

The module 203 is a delay module. It receives a model parameter θ(i), and stores the same temporarily, and delivers the model parameter which has been stored in the preceding cycle, to the multiplier 204 and the adder 207.

The value θ(i) delivered from the adder 207 is multiplied by a reference value GAIRMAP(i) of an intake air volume in the multiplier 208, and an estimated value GAIRHAT(i) of an intake air volume is delivered.

With this configuration, the θ(i) which minimizes the deviation e(i), can be obtained.

Fig. 3 shows a process for obtaining an injection quantity which leads to a target air/fuel ratio, using the estimating apparatus of an intake air volume of this embodiment. The intake air volume estimating process shown in Fig. 3 can be invoked at predetermined timing or under predetermined condition from a main program. In this embodiment, the following computation cycle of the process is synchronized with a time period of 10 to 30 milliseconds. It may be synchronized with an engine revolution number.

When the intake air volume estimating process is invoked from the main program, computation is carried out based on input timing of the TDC signal pulse to calculate an engine revolution number NE (S301). Next, the ECU 100 obtains an valve lift amount LIFT and a valve phase angle CAIN from the memory 100d (S302). Here, the engine 101 of this embodiment includes the variable valve mechanism. A valve lift amount LIFT and a valve phase angle CAIN which are necessary for controlling the variable valve lift mechanism and the variable valve phase mechanism, are previously calculated by executing a conventional program through which the ECU 100 controls the variable valve mechanism, and stored in the memory 100d. In this embodiment, a valve lift amount LIFT and a valve phase angle CAIN which are previously stored in the memory 100d in this manner are used.

Next, the ECU 100 refers to the intake air volume reference map in the memory 100d based on the engine revolution number NE, the valve lift amount LIFT and the valve phase angle CAIN, and obtains the corresponding reference value GAIRMAP of an intake air volume (S303).

Next, the ECU 100 obtains a measured value GAIRTH from the airflow meter 102. A sampling value obtained directly from the airflow meter 102 can be used as the measured value GAIRTH, but in this embodiment, a value obtained by moving averaging sampling values of 6 successive outputs of CRK, is used as the measured value. The ECU 100 multiplies the moving average value by a predetermined coefficient to obtain an intake air volume GAIRTH (g/str) which is a measured value for one stroke (S304).

When the measured value GAIRTH is obtained, the ECU 100 reads out θ in the preceding cycle, from the memory and calculates a deviation e in accordance with the equation (4). Further, the ECU 100 reads out P in the preceding cycle, from the memory and calculates θ in accordance with the equation (5). This θ is substituted to equation (3) and an estimated value GAIRHAT of an intake air volume is calculated (S305). The values of θ and P calculated in this manner are necessary for calculation in the next cycle and therefore, they are stored in the memory 100d. Although P which is an identification gain is sequentially calculated, P may be a fixed value.

Although a method of least squares is used for obtaining θ which minimizes deviation e, in this embodiment, a steepest descent method may be used.

After having calculated an estimated value GAIRHAT of an intake air volume, the ECU 100 calculates an injection quantity based on the estimated value GAIRHAT of an intake air volume (S306). The injection quantity is calculated by any conventional method that calculates an injection quantity realizing the target air/fuel ratio.

It is difficult to determine whether the state is a transient one or not when measuring values from the air flow meter. By the process mentioned above, however, measured values from the airflow meter can be corrected using the map values and values of an intake air volume from which fluctuation due to pulsing content is removed, can be obtained. Since an injection quantity can be controlled based on an estimated value of an intake air volume, from which fluctuation is removed, a stable air/fuel ratio can be realized even if the engine is of a non-throttle type.

The estimating apparatus of an intake air volume according to this embodiment does not require setting of a filter order, or determining whether the state is a transient one or not.

Fig. 6 shows a measured value (broken line) of the airflow meter 102, a moving average (dotted line) of airflow meter outputs, and an estimated value (solid line) calculated in accordance with this embodiment. It can be found that the measured value has the greatest fluctuation in air flow rate caused by pulses. It can also be found that even when a moving average is calculated to remove the pulsing content, large fluctuation cannot be removed completely, and delay of transient period due to the moving average is generated. On the other hand, it can be found that no delay of transient period is generated in the estimated value of an intake air volume obtained by the estimating apparatus of an intake air volume according to this embodiment, and large fluctuation in the air flow rate generated from the pulses is converged. Therefore, when the estimating apparatus of an intake air volume is used, a high response in a transient period can be realized.

Fig. 7(a) shows a result of measurement of an actual air/fuel ratio (A/F ratio, hereinafter), obtained when the estimating apparatus of an intake air volume is not employed. Fig. 7(b) shows a result of measurement of A/F, obtained when the estimating apparatus of an intake air volume is employed. In both cases, the engine revolution number is 1,000 rpm, the valve phase angle is 50° and the valve lift amount is 1.5 mm. In Figs. 7(a) and 7(b), the center solid lines KCMD represent the target air/fuel ratio, and KACT represents a measured A/F value. In Fig. 7(a), when the estimating apparatus of an intake air volume is not employed, the measured value of the air flow rate fluctuates and therefore, even if the injection quantity is controlled based on the value, the A/F value is not stabilized and largely fluctuates. On the other hand, if the estimating apparatus of an intake air volume is employed, it can be found that fluctuation is removed from the estimated value of an intake air volume, as shown in Fig. 7(b), and therefore an injection quantity based on the value does not fluctuate unlike Fig. 7(a). Accordingly, the air/fuel ratio KACT converges at the target value.

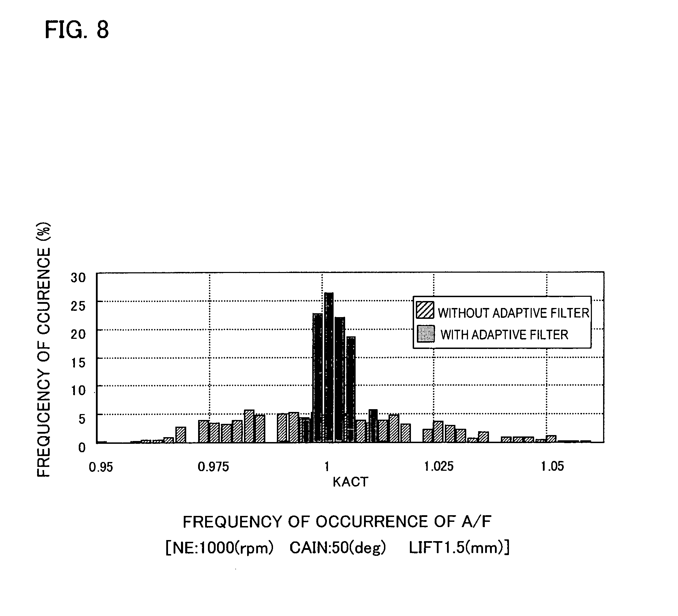

Fig. 8 shows frequency of occurrence of A/F values. When the estimating apparatus of an intake air volume of this embodiment (an adaptive filter) is not employed, the percentage of KACT values which fall within a range of ±1%, is 34.2%. When the estimating apparatus of an intake air volume of this embodiment is employed, the percentage of KACT values which fall within a range of ±1%, is 100%, and thus excellent result can be obtained. Therefore, if the estimating apparatus of an intake air volume is used, stable intake air volume value can be obtained even in an environment where pulse content is dominant such as in non-throttle type engines.

**Claims**

1. An estimating apparatus of an intake air volume for obtaining an intake air volume of an engine having a variable valve mechanism, the estimating apparatus of an intake air volume comprising:

   reference value obtaining means for obtaining a reference value of an intake air volume from a predetermined map based on the number of revolutions of the engine, a valve lift amount and a valve phase angle;
   measured value obtaining means for obtaining a measured value from an output of an airflow meter provided in an intake passage of the engine;
   computation means for obtaining a correction coefficient which minimizes a deviation between the measured value and a value obtained by multiplying the reference value of an intake air volume by the correction coefficient; and
   estimated value calculating means for calculating an estimated value of an intake air volume by multiplying the obtained correction coefficient by the reference value of an intake air volume.

2. The estimating apparatus of an intake air volume according to claim 1, wherein the computation means obtains the correction coefficient which minimizes the deviation using a method of least squares.

3. A program for allowing an electronic control unit to realize the following functions to obtain an intake air volume of an engine having a variable valve mechanism:

   a function of obtaining a reference value of an intake air volume from a predetermined map based on the number of revolutions of the engine, a valve lift amount and a valve phase angle;
   a function of obtaining a measured value corresponding to an output of an airflow meter provided in an intake passage of the engine;
   a function of obtaining a correction coefficient which minimizes a deviation between the measured value and a value obtained by multiplying the reference value of an intake air volume by the correction coefficient; and
   a function of calculating an estimated value of an intake air volume by multiplying the obtained correction coefficient by the reference value of an intake air volume.

4. A method for obtaining an intake air volume of an engine having a variable valve mechanism, comprising the steps of:

   obtaining a reference value of an intake air volume from a predetermined map based on the number of revolutions of the engine, a valve lift amount and a valve phase angle;
   obtaining a measured value from an output of an airflow meter provided in an intake passage of the engine;
   obtaining a correction coefficient which minimizes a deviation between the measured value and a value obtained by multiplying the reference value of an intake air volume by the correction coefficient; and
   calculating an estimated value of an intake air volume by multiplying the obtained correction coefficient by the reference value of an intake air volume.

5. The method for obtaining an intake air volume of an engine having a variable valve mechanism, according to claim 4, wherein the correction coefficient which minimizes the deviation, is obtained using a method of least squares.

FIG. 1

FIG. 2

201 — NE(i), LIFT(i), CAIN(i) → GAIRMAP(i)

202 — MODULE

205 (+/−) → e(i)

GAIRTH(i)

206

207 (⊕) → θ(i)

208 (⊗) → GAIRHAT(i)

203 — $\frac{1}{Z}$

204 (⊗)

θ(i−1)

200

FIG. 3

```
        ╭─────────────────────────╮
        │     INTAKE AIR VOLUME     │
        │    ESTIMATING PROCESS     │
        ╰─────────────────────────╯
                     │
        ┌─────────────────────────┐
        │        CALCULATE          │╶── S301
        │ ENGINE REVOLUTION NUMBER NE│
        └─────────────────────────┘
                     │
        ┌─────────────────────────┐
        │ OBTAIN LIFT VALUE, CAIN VALUE │╶── S302
        └─────────────────────────┘
                     │
        ┌─────────────────────────┐
        │     RETRIEVE GAIRMAP       │╶── S303
        └─────────────────────────┘
                     │
        ┌─────────────────────────┐
        │      OBTAIN GAIRTH         │╶── S304
        └─────────────────────────┘
                     │
        ┌─────────────────────────┐
        │    CALCULATE GAIRHAT       │╶── S305
        └─────────────────────────┘
                     │
        ┌─────────────────────────┐
        │ CALCULATE INJECTION QUANTITY │╶── S306
        └─────────────────────────┘
                     │
        ╭─────────────────────────╮
        │           EXIT            │
        ╰─────────────────────────╯
```

FIG. 4

MEASURED
VALUE

MOVING
AVERAGE VALUE

LARGE

SMALL

time

[NE:1000(rpm)   CAIN:50(deg)   LIFT1.5(mm)]

# FIG. 5

(a) th=10deg — FREQUENCY OF OCCURRENCE (%) vs GAIRAVE (1.00)

(b) th=20deg — FREQUENCY OF OCCURRENCE (%) vs GAIRAVE (1.00)

(c) th=30deg — FREQUENCY OF OCCURRENCE (%) vs GAIRAVE (1.00)

(d) th=40deg — FREQUENCY OF OCCURRENCE (%) vs GAIRAVE (1.00)

(e) th=60deg — FREQUENCY OF OCCURRENCE (%) vs GAIRAVE (1.00)

(f) th=80deg — FREQUENCY OF OCCURRENCE (%) vs GAIRAVE (1.00)

[NE:1500(rpm)  CAIN:25(deg)  LIFT1.0(mm)]

FIG. 6

FIG. 7

KACT (AIR/FUEL RATIO)

KCMD (TARGET AIR/FUEL RATIO)

KCMD,KACT

1

time

(a) RESULT OF A/F MEASUREMENT WITHOUT USING ESTIMATOR

[NE:1000(rpm) CAIN:50(deg) LIFT1.5(mm)]

KACT (AIR/FUEL RATIO)

KCMD (TARGET AIR/FUEL RATIO)

KCMD,KACT

1

time

(b) RESULT OF A/F MEASUREMENT USING ESTIMATOR

[NE:1000(rpm) CAIN:50(deg) LIFT1.5(mm)]

15

FIG. 8

FREQUENCY OF OCCURRENCE OF A/F
[NE:1000(rpm)   CAIN:50(deg)    LIFT1.5(mm)]

## INTERNATIONAL SEARCH REPORT

| | International application No. |
|---|---|
| | PCT/JP2005/011289 |

**A. CLASSIFICATION OF SUBJECT MATTER**
Int.Cl$^7$ F02D45/00, F02D13/02

According to International Patent Classification (IPC) or to both national classification and IPC

**B. FIELDS SEARCHED**

Minimum documentation searched (classification system followed by classification symbols)
Int.Cl$^7$ F02D45/00, F02D13/02

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2004-156456 A (Honda Motor Co., Ltd.), 03 June, 2004 (03.06.04), Full text; all drawings & US 2004/0162681 A1 & EP 1416141 A2 | 1-5 |
| Y | JP 2004-116368 A (Toyota Motor Corp.), 15 April, 2004 (15.04.04), Par. Nos. [0018] to [0020] & US 2004/0250782 A1 & DE 10344326 A1 | 1-5 |
| A | JP 2000-274302 A (Toyota Motor Corp.), 03 October, 2000 (03.10.00), Full text; all drawings (Family: none) | 1-5 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 22 August, 2005 (22.08.05) | Date of mailing of the international search report 06 September, 2005 (06.09.05) |
|---|---|
| Name and mailing address of the ISA/ Japanese Patent Office | Authorized officer |
| Facsimile No. | Telephone No. |

Form PCT/ISA/210 (second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7054625 A
- JP 11223113 A
- JP 5306643 A
- JP 2004156456 A